Europäisches Patentamt

European Patent Office

Office européen des brevets

(19)

(11) **EP 1 278 309 A1**

## (12) EUROPEAN PATENT APPLICATION
published in accordance with Art. 158(3) EPC

(43) Date of publication:
**22.01.2003 Bulletin 2003/04**

(21) Application number: **00920330.8**

(22) Date of filing: **18.04.2000**

(51) Int Cl.7: **H04B 1/707**, H04J 13/04

(86) International application number:
**PCT/CN00/00092**

(87) International publication number:
**WO 01/080438 (25.10.2001 Gazette 2001/43)**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **LinkAir Communications, Inc.
San Jose, California 95134 (US)**

(72) Inventor: **LI, Daoben, Room 908
Beijing 100044 (CN)**

(74) Representative: **Epping Hermann & Fischer
Ridlerstrasse 55
80339 München (DE)**

## (54) A METHOD OF ORTHOGONAL CONVERSION OF SPREAD SPECTRUM MULTIPLE ACCESS CODE

(57)  This invention discloses a forming method and a transforming method of orthogonal code group applied in any code division multiple access system, spread spectrum system and digital communication system. The method makes the orthogonal code group is formed from a nonzero real number and complex number sequence, with any length, by orthogonal rotation. The method also makes multi-groups of orthogonal code, which are got by orthogonal rotating transformation from any code group, with real number and complex number. The multi-groups of orthogonal code keep substantially consistent characteristics with the original code group, and every code is orthogonal with each other before and after transformation.

**EP 1 278 309 A1**

**Description**

Field of the Invention

The present invention relates generally to wireless spread spectrum technology and digital mobile communication technology, and more particularly although not exclusively to a method for forming spread spectrum multiple access coding, and a method of orthogonal transformation between multiple access code groups.

Background of the Invention

With the coming of the information society and the personal communications era, people pay more attention to code division multiple access (CDMA) technology. This is because CDMA provides larger system capacity compared with other multiple access methods.

In a CDMA system, the selection of multiple access code influences directly system performance, including criteria such as capacity, anti-inference, speed of access and switching, etc. Each user in the system has its own special spread spectrum multiple access code for identification. General speaking, within a small area (or sector), spread spectrum multiple access code between users must be completely orthogonal or nearly completely orthogonal. At the same time, spread spectrum multiple access code of the users, between different small areas, should be as diverse as possible. This is not only for identifying a small area (or sector) and user, but also for decreasing interference between a neighboring small area (or sector) and user. This is because usually a user station (or base station) receives not only signal from its own small area base station (or user station), but also signal from its neighboring area base station (or user station). Therefore, any system with code division multiple access (CDMA) takes the spread spectrum multiple access codes, used for different small area (or sector), as different as possible. The difference usually is described by the correlation function between multiple access codes in mathematics, the value of correlation function is smaller, the orthogonality is better and the difference is larger.

At present, the most popular method, for differentiating spread spectrum multiple access code, used for different small areas, uses the differential offset of a long pseudorandom sequence to scramble the basic orthogonal spread spectrum multiple access code. For example, with the following mutually and completely orthogonal spread spectrum multiple access code:

$$
\begin{array}{cccc}
+ & + & + & + \\
+ & - & + & - \\
+ & + & - & - \\
+ & - & - & +
\end{array}
$$

Where + represents digital +1, - represents digital -1; every row represents a basic spread spectrum multiple access code, respectively. Now they are scrambled with - + + + and + + + - respectively, (i.e. multiply the corresponding items), then the following two groups of spread spectrum multiple access code are produced:

$$
\begin{array}{cccc}
- & + & + & + \\
- & - & + & - \\
- & + & - & - \\
- & - & - & +
\end{array}
\qquad \text{(scrambled by } - \;\; + \;\; + \;\; + \text{), and}
$$

$$
\begin{array}{cccc}
+ & + & + & - \\
+ & - & + & + \\
+ & + & - & + \\
+ & - & - & -
\end{array}
$$

(scrambled by + + + −).

Obviously, within each code group of the two newly produced groups of spread spectrum multiple access code, every spread spectrum multiple access code is still completely orthogonal; but between the two groups, there is not only larger correlation but also differentiation. This is the basic principle of allocating the multiple access code used for a small area, or of building a cellular small area network.

With the scrambling transformation method, although after transformation every multiple access code within a code group keeps the orthogonality, but there are following disadvantages:

1. After scrambling transformation, the code group does not keep the non-period auto-correlation and cross-correlation characteristics of the basic code group.
2. Basic code and the code produced by scrambling loses complete orthogonality.
3. It must have a basic orthogonal code group for scrambling transformation.

Summary of the Invention

The present invention provides a method for forming the spread spectrum code with orthogonal rotation. A real number and complex number sequence, with any length, is transformed by multi-pass orthogonal rotation to form a new orthogonal group of spread spectrum multiple access code.

The present invention further provides an orthogonal rotation transformation method between groups of spread spectrum code. After transformation, the formed code groups keep substantially consistent correlation characteristics with the code group before transformation including period, non-period and hybrid auto-correlation characteristics; and period, non-period and hybrid cross-correlation characteristics. It makes multiple access codes between the one before transformation and the one after transformation, are mutually orthogonal.

In one aspect of the invention, there is provided a method of forming the spread spectrum code with orthogonal rotation, which method is comprised of the following steps:

selecting a nonzero sequence with a length of N, $\mathbf{a}_0 = [a_{00}, a_{01}, a_{02}, \cdots, a_{0N-1}]$, N $\geq 2$;
selecting a basic rotating angle between consecutive elements, $\alpha_1, \alpha_2, \cdots, \alpha_{N-1}$, while the sum of the basic rotating angles equals to $2\pi$;

wherein the integral times of said basic rotating angle rotate the said nonzero sequence with N-1 times, respectively, where the value of integral times corresponds to the number of rotated times. Together with the original sequence, the result is N sequences,

$$
\begin{aligned}
\mathbf{a}_0 &= \left[a_{00}, a_{01}, a_{02}, \cdots, a_{0N-1}\right] \\
\mathbf{a}_1 &= \left[a_{00}, a_{01}e^{j\alpha_1}, a_{02}e^{j\alpha_2}, \cdots, a_{0N-1}e^{j\alpha_{N-1}}\right] \\
\mathbf{a}_2 &= \left[a_{00}, a_{01}e^{j2\alpha_1}, a_{02}e^{j2\alpha_2}, \cdots, a_{0N-1}e^{j2\alpha_{N-1}}\right] \\
&\vdots \\
\mathbf{a}_{N-1} &= \left[a_{00}, a_{01}e^{j(N-1)\alpha_1}, a_{02}e^{j(N-1)\alpha_2}, \cdots, a_{0N-1}e^{j(N-1)\alpha_{N-1}}\right];
\end{aligned}
$$

which N sequences are mutually orthogonal and comprise an orthogonal spread spectrum multiple access code group.

According to another aspect of the invention, a transformation method, with orthogonal rotation for spread spectrum multiple access code group, is comprised of the following steps:

providing an orthogonal code group with M sequences, wherein every sequence has a length of N,

$$\mathbf{B}^{T_0} = \begin{bmatrix} \mathbf{b}_0^{T_0} \\ \mathbf{b}_1^{T_0} \\ \vdots \\ \mathbf{b}_{M-1}^{T_0} \end{bmatrix},$$

Where $\mathbf{b}_m^{T0} = [b_{m0}, b_{m1}, b_{m2}, \cdots, b_{mN-1}]$, $m = 0,1,2,\cdots,M - 1$ ;
selecting a basic rotating angle between consecutive elements $\alpha_1, \alpha_2, \cdots, \alpha_{N-1}$, while the sum of the basic rotating angles equals to $2\pi$ ;

wherein the integral times of said basic rotating angle rotate the said orthogonal code group with N-1 times, respectively, where the value of integral times corresponds to the number of rotated times, together with the original orthogonal code group, the result is N orthogonal code groups,

$$B^{T_0}, B^{T_1}, B^{T_2}, \cdots, B^{T_{N-1}},$$

where

$$\mathbf{B}^{T_n} = \begin{bmatrix} \mathbf{b}_0^{T_n} \\ \mathbf{b}_1^{T_n} \\ \vdots \\ \mathbf{b}_{M-1}^{T_n} \end{bmatrix},$$

$$\mathbf{b}_m^{T_n} = \left[ b_{m0}, b_{m1}e^{jn\alpha_1}, b_{m2}e^{jn\alpha_2}, \cdots, b_{mN-1}e^{jn\alpha_{N-1}} \right],\ n = 0,1,\ldots,N\text{-}1,\ m = 0,1,\ldots,M\text{-}1。$$

With the method of the invention, a nonzero real number and complex number sequence, with any length, can be made into an orthogonal code group by adequate rotation. Also, with the method of the invention, any orthogonal code group, with real number and complex number, can be made into orthogonal code multi-groups by transformation. The later keeps substantially consistent characteristics with the original code group, and the codes before and after transformation are mutually orthogonal. This feature can satisfy the various requirements of code division multiple access system.

Any system with code division multiple access (CDMA) will make spread spectrum multiple access code, to be used in different small area (or sector), as diverse as possible. The method of the invention offers an effective method for network planning, transferring and capacity increasing, etc. Besides, with multi-times transformation rotation, an orthogonal code group can be quickly made from a nonzero real number and complex number sequence with any length. The method is simple and effective. It replaces the conventional method that uses complicated rules, with a simple method, by rotation, for forming orthogonal code.

Detailed Description of Preferred Embodiments of the Invention

In the following an embodiment of the invention is described in detail.
Suppose there is a binary sequence with length of 3 elements, (+ + +) ; and we make orthogonal rotation transformation of the sequence, i.e., rotate equally between before and later consecutive elements. The sum of rotating angles keeps integral times of period, i.e., $n \times 360°$ $(2n\pi)$, $n = 1,2,\cdots$. When the rotating period is one cycle, as the length of the code is 3, rotation, between two consecutive elements, needs to be $360° / 3 = 120°$

$$(2\pi/3);$$

so, by one cycle rotation, a new sequence,

$$(+ \quad e^{j2\pi/3} \quad e^{-j2\pi/3})$$

is produced. When the rotating period is two cycles, rotation, between two consecutive elements, needs to be

$$2 \times 360°/3 = 240° \, (4\pi/3),$$

or reverse rotation $120°$

$$(-2\pi/3);$$

so, by two cycles rotation, a new sequence,

$$(+ \quad e^{-j2\pi/3} \quad e^{j2\pi/3}),$$

is produced. Three cycles or more than three cycles rotation is meaningless, because it does not produce any new sequences. Therefore, after orthogonal rotation of sequence (+ + +), a code group is obtained:

Basic sequence $C_0 = [+ + +]$;

$$\text{Rotate one cycle} \quad \mathbf{C}_1 = [+ \quad e^{j2\pi/3} \quad e^{-j2\pi/3}];$$

$$\text{Rotate two cycles} \quad \mathbf{C}_2 = [+ \quad e^{-j2\pi/3} \quad e^{j2\pi/3}];$$

Obviously, the code group formed by orthogonal rotation, is an orthogonal code group, because any two sequences are orthogonal. Besides, the orthogonality of the group is totally independent of the initial phase of the sequences. For example:

$$C_0(\varphi_0) = [e^{j\varphi_0} \quad e^{j\varphi_0} \quad e^{j\varphi_0}];$$

$$\mathbf{C}_1(\varphi_1) = [e^{j\varphi_1} \quad e^{j\left(\varphi_1 + \frac{2\pi}{3}\right)} \quad e^{j\left(\varphi_1 - \frac{2\pi}{3}\right)}];$$

$$C_2(\varphi_2)=[\,e^{j\varphi_2}\quad e^{j\left(\varphi_2-\frac{2\pi}{3}\right)}\quad e^{j\left(\varphi_2+\frac{2\pi}{3}\right)}\,];$$

Represent three sequences, said above, with initial phase $\varphi_0$, $\varphi_1$, and $\varphi_2$, respectively. It is obvious that for any initial phase $\varphi_0$, $\varphi_1$ and $\varphi_2$, the code group is still a orthogonal code group. This feature is quite useful for engineering practice.

In the following, with listing, the non-period auto-correlation of every code, said above, is described. Table 1 lists the non-period auto-correlation function of each code.

## Table 1

Non-period auto-correlation function of $C_0(\varphi_0)=[\,e^{j\varphi_0}\quad e^{j\varphi_0}\quad e^{j\varphi_0}\,]$;

$$C_1(\varphi_1)=[\,e^{j\varphi_1}\quad e^{j\left(\varphi_1+\frac{2\pi}{3}\right)}\quad e^{j\left(\varphi_1-\frac{2\pi}{3}\right)}\,];\quad C_2(\varphi_2)=[\,e^{j\varphi_2}\quad e^{j\left(\varphi_2-\frac{2\pi}{3}\right)}\quad e^{j\left(\varphi_2+\frac{2\pi}{3}\right)}\,]$$

|  | -2 | -1 | 0 | 1 | 2 |
|---|---|---|---|---|---|
| $R_{C_0}(\tau)$ | 1 | 2 | 3 | 2 | 1 |
| $R_{C_1}(\tau)$ | $e^{j2\pi/3}$ | $2e^{-j2\pi/3}$ | 3 | $2e^{j2\pi/3}$ | $e^{-j2\pi/3}$ |
| $R_{C_2}(\tau)$ | $e^{-j2\pi/3}$ | $2e^{j2\pi/3}$ | 3 | $2e^{-j2\pi/3}$ | $e^{j2\pi/3}$ |

It is shown in Table 1 that $R_{C_0}(\tau)$, $R_{C_1}(\tau)$ and $R_{C_2}(r)$, except there are some fixed phase shift at side lobe, is substantially consistent. This feature is quite useful for engineering practice too.

In the following, the influence of orthogonal rotation on orthogonal or by-orthogonal group of spread spectrum code is described. Also, take a ternary code group as an example, suppose

$$C_0 = [+\ +\ +]$$

$$C_1 = [+\ -\ -]$$

$$C_2 = [-\ -\ +]$$

$$C_3 = [-\ +\ -]$$

is a three elements code group, Table 2 is the table of non-period auto-correlation and cross-correlation function.

Table 2

| Non-period auto-correlation and cross-correlation function of $C_0 = [+\ +\ +]$; $C_1 = [+\ -\ -]$; $C_2=[-\ -\ +]$; $C_3 = [-\ +\ -]$ | | | | | |
|---|---|---|---|---|---|
|  | -2 | -1 | 0 | 1 | 2 |
| $R_{C_0}(\tau)$ | 1 | 2 | 3 | 2 | 1 |

Table 2   (continued)

| Non-period auto-correlation and cross-correlation function of $C_0 = [+ + +]; C_1 = [+ - -]; C_2 = [- - +]; C_3 = [- + -]$ | | | | | |
|---|---|---|---|---|---|
| | -2 | -1 | 0 | 1 | 2 |
| $R_{C_1}(\tau)$ | -1 | 0 | 3 | 0 | -1 |
| $R_{C_2}(\tau)$ | -1 | 0 | 3 | 0 | -1 |
| $R_{C_3}(\tau)$ | 1 | 0 | 3 | 0 | 1 |
| $R_{C_0C_1}(\tau)$ | -1 | -2 | -1 | 0 | 1 |
| $R_{C_0C_2}(\tau)$ | 1 | 0 | -1 | -2 | -1 |
| $R_{C_0C_3}(\tau)$ | -1 | 0 | -1 | 0 | -1 |
| $R_{C_1C_2}(\tau)$ | 1 | -2 | -1 | 2 | 1 |
| $R_{C_1C_3}(\tau)$ | -1 | 2 | -1 | 0 | 1 |
| $R_{C_2C_3}(\tau)$ | 1 | 0 | -1 | 2 | -1 |

After orthogonal rotation transformation, the basic group of multiple access code produces the following three basic group of multiple access code.

$$C_0^{T_0} = [+ \quad + \quad +] \quad C_0^{T_1} = \left[+ \quad e^{j2\pi/3} \quad e^{-j2\pi/3}\right] \quad C_0^{T_2} = \left[+ \quad e^{-j2\pi/3} \quad e^{j2\pi/3}\right]$$

$$C_1^{T_0} = [+ \quad - \quad -] \quad C_1^{T_1} = \left[+ \quad e^{-j\pi/3} \quad e^{j\pi/3}\right] \quad C_1^{T_2} = \left[+ \quad e^{j\pi/3} \quad e^{-j\pi/3}\right]$$

$$C_2^{T_0} = [- \quad - \quad +] \quad C_2^{T_1} = \left[- \quad e^{-j\pi/3} \quad e^{-j2\pi/3}\right] \quad C_2^{T_2} = \left[- \quad e^{j\pi/3} \quad e^{j2\pi/3}\right]$$

$$C_3^{T_0} = [- \quad + \quad -] \quad C_3^{T_1} = \left[- \quad e^{j2\pi/3} \quad e^{j\pi/3}\right] \quad C_3^{T_2} = \left[- \quad e^{-j2\pi/3} \quad e^{-j\pi/3}\right]$$

(original code group)          (rotate one cycle)          (rotate two cycles)

It is easy to verify that every code, before and after orthogonal rotation, is thoroughly orthogonal, i.e. $R_{C_i^{T_k} C_i^{T_l}}(0) \equiv 0$, where $i, k, l = 0, 1, 2$, $k \neq l$. This means that there are four orthogonal code groups.

$$C_0^{T_0} = [+ \quad + \quad +]$$

$$C_0^{T_1} = \left[+ \quad e^{j2\pi/3} \quad e^{-j2\pi/3}\right]$$

$$C_0^{T_2} = \left[+ \quad e^{-j2\pi/3} \quad e^{j2\pi/3}\right] \qquad ;$$

$$C_1^{T_0} = [+ \quad - \quad -]$$

$$C_1^{T_1} = \left[+ \quad e^{-j\pi/3} \quad e^{j\pi/3}\right]$$

$$C_1^{T_2} = \left[+ \quad e^{j\pi/3} \quad e^{-j\pi/3}\right]$$

$$\mathbf{C}_2^{T_0} = \begin{bmatrix} - & - & + \end{bmatrix} \qquad\qquad \mathbf{C}_3^{T_0} = \begin{bmatrix} - & + & - \end{bmatrix}$$

$$\mathbf{C}_2^{T_1} = \begin{bmatrix} - & e^{-j\pi/3} & e^{-j2\pi/3} \end{bmatrix} \qquad\qquad \mathbf{C}_3^{T_1} = \begin{bmatrix} - & e^{j2\pi/3} & e^{j\pi/3} \end{bmatrix}$$

$$\mathbf{C}_2^{T_2} = \begin{bmatrix} - & e^{j\pi/3} & e^{j2\pi/3} \end{bmatrix} \qquad ; \qquad \mathbf{C}_3^{T_2} = \begin{bmatrix} - & e^{-j2\pi/3} & e^{-j\pi/3} \end{bmatrix} \quad .$$

Table 3 and 4 are the tables of non-period auto-correlation and cross-correlation function of code group formed by orthogonal rotation. It is seen from these tables that except introducing some fixed phase shift at the side lobes of correlation function, the auto-correlation and cross-correlation functions of code groups, before and after orthogonal rotation, are substantially consistent.

## Table 3

Non-period auto-correlation and cross-correlation function of

$$\mathbf{C}_0^{T_1} = \begin{bmatrix} + & e^{j2\pi/3} & e^{-j2\pi/3} \end{bmatrix} \mathbf{C}_1^{T_1} = \begin{bmatrix} + & e^{-j\pi/3} & e^{j\pi/3} \end{bmatrix} \mathbf{C}_2^{T_1} = \begin{bmatrix} - & e^{-j\pi/3} & e^{-j2\pi/3} \end{bmatrix}$$

$$\mathbf{C}_3^{T_1} = \begin{bmatrix} - & e^{j2\pi/3} & e^{j\pi/3} \end{bmatrix}$$

|  | -2 | -1 | 0 | 1 | 2 |
|---|---|---|---|---|---|
| $R_{C_0}(\tau)$ | $e^{j2\pi/3}$ | $2e^{-j2\pi/3}$ | 3 | $2e^{j2\pi/3}$ | $e^{-j2\pi/3}$ |
| $R_{C_1}(\tau)$ | $e^{-j\pi/3}$ | 0 | 3 | 0 | $e^{j\pi/3}$ |
| $R_{C_2}(\tau)$ | $e^{-j\pi/3}$ | 0 | 3 | 0 | $e^{j\pi/3}$ |
| $R_{C_3}(\tau)$ | $e^{j2\pi/3}$ | 0 | 3 | 0 | $e^{-j2\pi/3}$ |
| $R_{C_0 C_1}(\tau)$ | $e^{-j\pi/3}$ | $2e^{j\pi/3}$ | -1 | 0 | $e^{-j2\pi/3}$ |
| $R_{C_0 C_2}(\tau)$ | $e^{j2\pi/3}$ | 0 | -1 | $2e^{-j\pi/3}$ | $e^{j\pi/3}$ |
| $R_{C_0 C_3}(\tau)$ | $e^{-j\pi/3}$ | 0 | -1 | 0 | $e^{j\pi/3}$ |
| $R_{C_1 C_2}(\tau)$ | $e^{j2\pi/3}$ | $2e^{j\pi/3}$ | -1 | $2e^{j2\pi/3}$ | $e^{-j2\pi/3}$ |
| $R_{C_1 C_3}(\tau)$ | $e^{-j\pi/3}$ | $2e^{-j2\pi/3}$ | -1 | 0 | $e^{-j2\pi/3}$ |
| $R_{C_2 C_3}(\tau)$ | $e^{j2\pi/3}$ | 0 | -1 | $2e^{j2\pi/3}$ | $e^{j\pi/3}$ |

8

## Table 4

Non-period auto-correlation and cross-correlation function of $C_0^{T_2} = \begin{bmatrix} + & e^{-j2\pi/3} & e^{j2\pi/3} \end{bmatrix}$

$$C_1^{T_2} = \begin{bmatrix} + & e^{j\pi/3} & e^{-j\pi/3} \end{bmatrix} \quad C_2^{T_2} = \begin{bmatrix} - & e^{j\pi/3} & e^{j2\pi/3} \end{bmatrix} \quad C_3^{T_2} = \begin{bmatrix} - & e^{-j2\pi/3} & e^{-j\pi/3} \end{bmatrix}$$

|  | -2 | -1 | 0 | 1 | 2 |
|---|---|---|---|---|---|
| $R_{C_0}(\tau)$ | $e^{-j2\pi/3}$ | $2e^{j2\pi/3}$ | 3 | $2e^{-j2\pi/3}$ | $e^{j2\pi/3}$ |
| $R_{C_1}(\tau)$ | $e^{j\pi/3}$ | 0 | 3 | 0 | $e^{-j\pi/3}$ |
| $R_{C_2}(\tau)$ | $e^{j\pi/3}$ | 0 | 3 | 0 | $e^{-j\pi/3}$ |
| $R_{C_3}(\tau)$ | $e^{-j2\pi/3}$ | 0 | 3 | 0 | $e^{j2\pi/3}$ |
| $R_{C_0 C_1}(\tau)$ | $e^{j\pi/3}$ | $2e^{-j\pi/3}$ | -1 | 0 | $e^{j2\pi/3}$ |
| $R_{C_0 C_2}(\tau)$ | $e^{-j2\pi/3}$ | 0 | -1 | $2e^{j\pi/3}$ | $e^{-j\pi/3}$ |
| $R_{C_0 C_3}(\tau)$ | $e^{j\pi/3}$ | 0 | -1 | 0 | $e^{-j\pi/3}$ |
| $R_{C_1 C_2}(\tau)$ | $e^{-j2\pi/3}$ | $2e^{-j\pi/3}$ | -1 | $2e^{-j2\pi/3}$ | $e^{j2\pi/3}$ |
| $R_{C_1 C_3}(\tau)$ | $e^{j\pi/3}$ | $2e^{j2\pi/3}$ | -1 | 0 | $e^{j2\pi/3}$ |
| $R_{C_2 C_3}(\tau)$ | $e^{-j2\pi/3}$ | 0 | -1 | $2e^{-j2\pi/3}$ | $e^{-j\pi/3}$ |

In the following, a more general embodiment of the invention is described.

According to the general embodiment of the invention, wherein the method is characterized that: an orthogonal code group is formed by orthogonal rotation from a nonzero sequence with length N $\mathbf{a}_0 = [a_{00}, a_{01}, a_{02}, \cdots, a_{0N-1}]$. If every element in the sequence $a_{0n}$ ($n = 0,1,2\cdots,N-1$), is a real number with equal absolute value, or a complex number with equal modulus value (i.e., $|a_{0n}|^2$ equals to constant), then the orthogonal code group can be simply formed by equally rotation. The method is as follows.

According to the code length, define the basic rotating angle $\alpha =$

$$2\pi/N,$$

then with this basic rotating angle, produce N-1 new code sequence, they are:

$$\mathbf{a}_1(\varphi_1) = \left[ a_{00}e^{j\varphi_1}, a_{01}e^{j(\varphi_1+\alpha)}, a_{02}e^{j(\varphi_1+2\alpha)}, \cdots, a_{0N-1}e^{j[\varphi_1+(N-1)\alpha]} \right]$$

$$\mathbf{a}_2(\varphi_2) = \left[ a_{00}e^{j\varphi_2}, a_{01}e^{j(\varphi_2+2\alpha)}, a_{02}e^{j(\varphi_2+4\alpha)}, \cdots, a_{0N-1}e^{j[\varphi_2+2(N-1)\alpha]} \right]$$

$$\vdots$$

$$\mathbf{a}_{N-1}(\varphi_{N-1}) = \left[ a_{00}e^{j\varphi_{N-1}}, a_{01}e^{j(\varphi_{N-1}+(N-1)\alpha)}, a_{02}e^{j(\varphi_{N-1}+2(N-1)\alpha)}, \cdots, a_{0N-1}e^{j[\varphi_{N-1}+(N-1)^2\alpha]} \right]$$

Where $\varphi_1, \varphi_2, \cdots, \varphi_{N-1}$ are any initial angle.

$a_0$ can also have any initial value $\varphi_0$, that is:

$$\mathbf{a}_0(\varphi_0) = \left[ a_{00}e^{j\varphi_0}, a_{01}e^{j\varphi_0}, a_{02}e^{j\varphi_0}, \cdots, a_{0N-1}e^{j\varphi_0} \right].$$

Adding with the original sequence, there are N sequences in total, $\mathbf{a}_0(\varphi_0), \mathbf{a}_1(\varphi_1), \mathbf{a}_2(\varphi_2), \cdots, \mathbf{a}_{N-1}(\varphi_{N-1})$. They comprise an orthogonal code group.

If $|a_{0n}|^2, (n = 0, 1, 2, \cdots, N-1)$, does not equal to a constant, i.e., different n has different $|a_{0n}|^2$ value, in this case it is impossible to have equally rotation, and the rotating angle is different for every element in the sequence. For simplicity, every initial phase value is omitted temporarily; after rotation, N-1 new sequences are produced; they are:

$$\mathbf{a}_1 = \left[ a_{00}, a_{01}e^{j\alpha_1}, a_{02}e^{j\alpha_2}, \cdots, a_{0N-1}e^{j\alpha_{N-1}} \right]$$

$$\mathbf{a}_2 = \left[ a_{00}, a_{01}e^{j2\alpha_1}, a_{02}e^{j2\alpha_2}, \cdots, a_{0N-1}e^{j2\alpha_{N-1}} \right]$$

$$\vdots$$

$$\mathbf{a}_{N-1} = \left[ a_{00}, a_{01}e^{j(N-1)\alpha_1}, a_{02}e^{j(N-1)\alpha_2}, \cdots, a_{0N-1}e^{j(N-1)\alpha_{N-1}} \right]$$

Where $\alpha_1, \alpha_2, \cdots, \alpha_{N-1}$ are the basic rotating angles, the value is the solution of the following coupled equations:

$$\begin{cases} |a_{00}|^2 + |a_{01}|^2 e^{j\alpha_1} + |a_{02}|^2 e^{j\alpha_2} + \cdots + |a_{0N-1}|^2 e^{j\alpha_{N-1}} = 0 \\ |a_{00}|^2 + |a_{01}|^2 e^{j2\alpha_1} + |a_{02}|^2 e^{j2\alpha_2} + \cdots + |a_{0N-1}|^2 e^{j2\alpha_{N-1}} = 0 \\ \vdots \\ |a_{00}|^2 + |a_{01}|^2 e^{j(N-1)\alpha_1} + |a_{02}|^2 e^{j(N-1)\alpha_2} + \cdots + |a_{0N-1}|^2 e^{j(N-1)\alpha_{N-1}} = 0 \end{cases}$$

The coupled equations have N-1 unknowns $\alpha_1, \alpha_2, \cdots, \alpha_{N-1}$, and it is comprised by N-1 non-equivalence equations, so there is a solution. The initial phase of every sequence, $\varphi_0, \varphi_1, \varphi_2, \cdots, \varphi_{N-1}$, is no influence on the orthogonal rotation, so it is unnecessary to have them when solving the equations.

According to the invention, take an orthogonal code group B, and every sequence of the group with a length of N,

$$\mathbf{B}^{T_0} = \begin{bmatrix} \mathbf{b}_0^{T_0} \\ \mathbf{b}_1^{T_0} \\ \vdots \\ \mathbf{b}_{M-1}^{T_0} \end{bmatrix}$$

Where $\mathbf{b}^{T_0} = [b_{m0}, b_{m1}, \cdots, b_{mN-1}];$ $\qquad m = 0, 1, 2, \cdots, M-1$

After orthogonal rotation, N orthogonal code groups are formed:

$$B^{T_0}, B^{T_1}, B^{T_2}, \cdots, B^{T_{N-1}}$$

Where

$$\mathbf{B}^{T_n} = \begin{bmatrix} \mathbf{b}_0^{T_n} \\ \mathbf{b}_1^{T_n} \\ \vdots \\ \mathbf{b}_{M-1}^{T_n} \end{bmatrix}$$

$$\mathbf{b}_m^{T_n} = \left[ b_{m0}, b_{m1}e^{jn\alpha_2}, b_{m2}e^{jn\alpha_2}, \cdots, b_{mN-1}e^{jn\alpha_{N-1}} \right]$$

$n = 0, 1, 2, \cdots, N-1$ ; $m = 0, 1, 2, \cdots, M-1$.

Here, superscripts $T_n, (n = 0, 1, 2, \cdots, N-1)$, represent the formed code group after the nth orthogonal rotation, and $T_0$ represents the original code group. When every element of the sequence $b_{mn}$ $(m = 0, 1, \cdots, M-1; n = 0, 1, \cdots, N-1)$ is a real number with equal absolute value, or a complex number with equal modulus value, i.e., $|b_{mn}|^2$ equals to constant, make equally rotation, i.e.,

$$\alpha \frac{2k\pi}{N} \qquad k=1, 2, \cdots, N-1$$

If $|b_{mn}|^2$ is not a constant, the basic rotating angle $\alpha_1, \alpha_2, \cdots, \alpha_{N-1}$ is the solution of the following coupled equations,

$$\begin{cases} |b_{m0}|^2 + |b_{m1}|^2 e^{j\alpha_1} + |b_{m2}|^2 e^{j\alpha_2} + \cdots + |b_{mN-1}|^2 e^{j\alpha_{N-1}} = 0 \\ |b_{m0}|^2 + |b_{m1}|^2 e^{j2\alpha_1} + |b_{m2}|^2 e^{j2\alpha_2} + \cdots + |b_{mN-1}|^2 e^{j2\alpha_{N-1}} = 0 \\ \vdots \\ |b_{m0}|^2 + |b_{m1}|^2 e^{j(N-1)\alpha_1} + |b_{m2}|^2 e^{j(N-1)\alpha_2} + \cdots + |b_{mN-1}|^2 e^{j(N-1)\alpha_{N-1}} = 0 \end{cases}$$

$m = 0, 1, \cdots, M-1$

The solution of the equations is independent of m, take any m to solve it.

## Claims

1. A method of forming, with rotation, spread spectrum multiple access coding, comprising the steps of:

selecting a nonzero sequence with a length of N, $\mathbf{a}_0 = [a_{00}, a_{01}, a_{02},\cdots, a_{0N-1}]$, N≥2;
selecting a basic rotating angle between consecutive element, $\alpha_1, \alpha_2, \cdots, \alpha_{N-1}$, while the sum of the basic rotating angles equals to $2\pi$;

with the integral times of basic rotating angle, said above, rotate the nonzero sequence, said above, with N-1 times, respectively, where the value of integral times corresponds to the number of rotated times, together with the said original sequence, the result is N sequences,

$$\mathbf{a}_0 = \left[a_{00}, a_{01}, a_{02}, \cdots, a_{0N-1}\right]$$

$$\mathbf{a}_1 = \left[a_{00}, a_{01}e^{j\alpha_1}, a_{02}e^{j\alpha_2}, \cdots, a_{0N-1}e^{j\alpha_{N-1}}\right]$$

$$\mathbf{a}_2 = \left[a_{00}, a_{01}e^{j2\alpha_1}, a_{02}e^{j2\alpha_2}, \cdots, a_{0N-1}e^{j2\alpha_{N-1}}\right]$$

$$\vdots$$

$$\mathbf{a}_{N-1} = \left[a_{00}, a_{01}e^{j(N-1)\alpha_1}, a_{02}e^{j(N-1)\alpha_2}, \cdots, a_{0N-1}e^{j(N-1)\alpha_{N-1}}\right];$$

the N sequences are mutually orthogonal and comprise an orthogonal group of spread spectrum multiple access code.

2. The method of claim 1, wherein every element in the said nonzero sequence is a real number with equal absolute value, or a complex number with equal modulus value, i.e., $|a_{0n}|^2$ equals to a constant, where n = 0,1,...,N-1; then the said basic rotating angles $\alpha_1, \alpha_2, \cdots, \alpha_{N-1}$ are a group of constants:

$$\alpha \frac{2k\pi}{N} , \ k=1,2,\cdots,N-1.$$

3. The method of claim 1, wherein every element in the said nonzero sequence is a complex number with unequal modulus value, i.e., $|a_{0n}|^2$ does not equal to a constant, where n = 0,1,...,N-1; then the said basic rotating angles $\alpha_1, \alpha_2, \cdots \alpha_{N-1}$ are the solution of the following coupled equations:

$$\begin{cases} |a_{00}|^2 + |a_{01}|^2 e^{j\alpha_1} + |a_{02}|^2 e^{j\alpha_2} + \cdots + |a_{0N-1}|^2 e^{j\alpha_{N-1}} = 0 \\ |a_{00}|^2 + |a_{01}|^2 e^{j2\alpha_1} + |a_{02}|^2 e^{j2\alpha_2} + \cdots + |a_{0N-1}|^2 e^{j2\alpha_{N-1}} = 0 \\ \qquad\qquad\qquad\qquad \vdots \\ |a_{00}|^2 + |a_{01}|^2 e^{j(N-1)\alpha_1} + |a_{02}|^2 e^{j(N-1)\alpha_2} + \cdots + |a_{0N-1}|^2 e^{j(N-1)\alpha_{N-1}} = 0 \end{cases}$$

4. The method of any one of claim 1, claim 2 or claim 3, wherein the characteristics of original sequence and the new sequences formed by rotation are independent of the initial phase, i.e.,

$$\mathbf{a}_0(\varphi_0) = \left[a_{00}e^{j\varphi_0}, a_{01}e^{j\varphi_0}, a_{02}e^{j\varphi_0}, \cdots, a_{0N-1}e^{j\varphi_0}\right]$$

$$\mathbf{a}_1(\varphi_1) = \left[a_{00}e^{j\varphi_1}, a_{01}e^{j(\varphi_1+\alpha_1)}, a_{02}e^{j(\varphi_1+\alpha_2)}, \cdots, a_{0N-1}e^{j(\varphi_1+\alpha_{N-1})}\right]$$

$$\mathbf{a}_2(\varphi_2) = \left[a_{00}e^{j\varphi_2}, a_{01}e^{j(\varphi_2+2\alpha_1)}, a_{02}e^{j(\varphi_2+2\alpha_2)}, \cdots, a_{0N-1}e^{j(\varphi_2+2\alpha_{N-1})}\right]$$

$$\vdots$$

$$\mathbf{a}_{N-1}(\varphi_{N-1}) = \left[a_{00}e^{j\varphi_{N-1}}, a_{01}e^{j(\varphi_{N-1}+(N-1)\alpha_1)}, a_{02}e^{j(\varphi_{N-1}+(N-1)\alpha_2)}, \cdots, a_{0N-1}e^{j(\varphi_{N-1}+(N-1)\alpha_{N-1})}\right]$$

is still orthogonal code group for any $\varphi_0$, $\varphi_1$, $\varphi_2$,···,$\varphi_{N-1}$.

5. The method of any one of claim 1, claim 2 or claim 3, wherein comparing the auto-correlation function including period, non-period and hybrid auto-correlation of the new sequence, formed by rotation, with the original sequence, the difference between them is only that some fixed phase shift is introduced at the side lobe of the correlation function.

6. A transformation method with orthogonal rotation for spread spectrum multiple access code group, comprising the steps of:

providing an orthogonal code group with M sequences, wherein every sequence has a length of N,

$$\mathbf{B}^{T_0} = \begin{bmatrix} \mathbf{b}_0^{T_0} \\ \mathbf{b}_1^{T_0} \\ \vdots \\ \mathbf{b}_{M-1}^{T_0} \end{bmatrix},$$

where $\mathbf{b}_m^{T_0} = [b_{m0}, b_{m1}, b_{m2}, ···, b_{mN-1}]$, $m = 0,1,2,···,M$ - 1 ;
selecting a basic rotating angle between consecutive elements, $\alpha_1, \alpha_2, ···, \alpha_{N-1}$, while the sum of the basic rotating angles equals to $2\pi$ ;

wherein the integral times of said basic rotating angle, rotate the nonzero sequence with N-1 times, respectively, where the value of integral times corresponds to the number of rotated times, together with the original orthogonal code group, the result is N orthogonal code groups,

$$B^{T_0}, B^{T_1}, B^{T_2}, ···, B^{T_{N-1}},$$

where

$$\mathbf{B}^{T_n} = \begin{bmatrix} \mathbf{b}_0^{T_n} \\ \mathbf{b}_1^{T_n} \\ \vdots \\ \mathbf{b}_{M-1}^{T_n} \end{bmatrix},$$

$$\mathbf{b}_m^{T_n} = \left[ b_{m0}, b_{m1}e^{jn\alpha_1}, b_{m2}e^{jn\alpha_2}, ···, b_{mN-1}e^{jn\alpha_{N-1}} \right], \ n = 0,1,...,N-1, \ m = 0,1,...,M-1.$$

7. The method of claim 6, wherein it is characterized that: when every element, in the sequence of original code group, is a real number with equal absolute value, or a complex number with equal modulus value, i.e. $|b_{mn}|^2$ equals to a constant, m = 0,1, ..., M-1; n = 0,1, ..., N-1, then the said basic rotating angles $\alpha_1, \alpha_2, ···, \alpha_{N-1}$ are a group of constants:

$$\alpha \frac{2k\pi}{N} \ , \ k=1,2,···N\text{-}1.$$

8. The method of claim 6, wherein it is characterized that: when every element, in the sequence of original code group, is a complex number with unequal modulus value, i.e. $|b_{mn}|^2$ does not equals to a constant, m = 0,1, ..., M-1; n = 0,1, ..., N-1, then the said basic rotating angles, $\alpha_1, \alpha_2, ···, \alpha_{N-1}$, are the solution of the following coupled

equations:

$$\left\{\begin{array}{l} |b_{m0}|^2 + |b_{m1}|^2 e^{j\alpha_1} + |b_{m2}|^2 e^{j\alpha_2} + \cdots + |b_{mN-1}|^2 e^{j\alpha_{N-1}} = 0 \\ |b_{m0}|^2 + |b_{m1}|^2 e^{j2\alpha_1} + |b_{m2}|^2 e^{j2\alpha_2} + \cdots + |b_{mN-1}|^2 e^{j2\alpha_{N-1}} = 0 \\ \vdots \\ |b_{m0}|^2 + |b_{m1}|^2 e^{j(N-1)\alpha_1} + |b_{m2}|^2 e^{j(N-1)\alpha_2} + \cdots + |b_{mN-1}|^2 e^{j(N-1)\alpha_{N-1}} = 0 \end{array}\right. ,$$

$m = 0,1,...,M\text{-}1$;
the solution of the equations is independent with m, taking any m to solve it.

9. The method of any one of claim 6, claim 7 or claim 8, wherein it is characterized that: the characteristics of the original code group and the new code group, formed by rotation, are independent with the initial phase of every sequence.

10. The method of any one of claim 6, claim 7 or claim 8, wherein it is characterized that: comparing the auto-correlation function and cross-correlation function including period, non-period and hybrid auto-correlation of the sequences in the new orthogonal code group, formed by rotation, with the original orthogonal code group, the difference between them is only that some fixed phase shift is introduced at the side lobe of the correlation function.

11. The method of any one of claim 6, claim 7 or claim 8, wherein it is characterized that: having been variously orthogonal rotated, every sequence is completely orthogonal with each other.

| INTERNATIONAL SEARCH REPORT | International application No. |
|---|---|
| | PCT/CN00/00092 |

**A. CLASSIFICATION OF SUBJECT MATTER**

IPC$^7$H04B1/707;H04J13/04

According to International Patent Classification (IPC) or to both national classification and IPC

**B. FIELDS SEARCHED**

Minimum documentation searched (classification system followed by classification symbols)

IPC$^7$H04B1/707;H04J13/04

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 5471497(Ephraim Zehavi), .28.Nov. 1995(28.11.95);<br><br>The whole document | 1-11 |
| A | CN 1216180(L-3 Communications.Inc); 05.May.1999（05.05.99）,<br><br>The whole document | 1 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance· | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| Sep.25.2000(25.09.00) | 07 DEC 2000 (07.12.00) |
| Name and mailing address of the ISA/CN | Authorized officer |
| 6 Xitucheng Rd., Jimen Bridge, Haidian District,<br>　　　　　100088 Beijing, China | Song,Yanqin |
| Facsimile No. 86-10-62019451 | Telephone No. 86-10-62093192 |

Form PCT/ISA /210 (second sheet) (July 1998)

**INTERNATIONAL SEARCH REPORT**
Information patent family members

Search request No.

PCT/CN00/00092

| Patent document cited in search report | Publication dete | Patent family member(s) | Publication date |
|---|---|---|---|
| US 5471497 | 28.11.1995 | WO 9512938 | 11.05.1995 |
| | | CA 2174344 | 23.05.1995 |
| | | ZA 9408560 | 30.06.1995 |
| | | FI 961823 | 28.06.1996 |
| | | EP 0727116 | 21.08.1996 |
| | | CN 1133659 | 16.10.1996 |
| | | BR 9407920 | 26.11.1996 |
| | | JP 9504923T | 13.05.1997 |
| | | AU 678653 | 05.06.1997 |
| CN 1216180A | 05.05.1999 | WO 9731429 | 28.08.1997 |
| | | AU 1964694 | 10.09.1997 |
| | | US 5825835 | 20.10.1998 |
| | | EP 0882330 | 09.12.1998 |

Form PCT/ISA /210 (extra sheet6) (July 1998)

16